# EUROPEAN PATENT APPLICATION

(11) **EP 4 576 719 A1**
(43) Date of publication of application: **25.06.2025**
(21) Application number: 23869874.0
(22) Date of filing: 30.06.2023
(51) Int. Cl.: H04L 45/30

(54) **ROUTE PLANNING METHOD AND APPARATUS FOR REAL TIME AUDIO/VIDEO NETWORK**

(30) Priority: 29.09.2022 CN 202211207270
(71) Applicant: ZTE CORPORATION, Shenzhen, Guangdong 518057 (CN)
(72) Inventor: CHEN, Junjiang, Shenzhen, Guangdong 518057 (CN); LU, Jian, Shenzhen, Guangdong 518057 (CN); LIAO, Kai, Shenzhen, Guangdong 518057 (CN); GUO, Chengfeng, Shenzhen, Guangdong 518057 (CN); LIU, Zhilong, Shenzhen, Guangdong 518057 (CN)
(74) Representative: Perronace, Andrea
(86) International application number: PCT/CN2023/105176
(87) International publication number: WO 2024/066626

(57) **Abstract**

Embodiments of the present disclosure provide a route planning method and apparatus for a real time network. The method includes: collecting data of each edge node in a real time network (RTN) according to acquired real time network topology information of the RTN; mapping the data into quantification scores of links between the edge nodes according to route policies of different requirement types, so as to obtain a multi-policy full RTN link quantification network topology; and performing first route planning on a plurality of edge nodes in the multi-policy full RTN link quantification network topology, and performing second route planning on a data instance in a first edge node based on the first edge node in a first route.

## Description

### Technical Field

Embodiments of the present invention relate to the technical field of real time communications, and in particular to a route planning method and apparatus for a real time network.

### Background

Real time communication (RTC) is a technology for real time interaction of data such as videos and audios. In recent years, with the development of digital technologies such as 5G, artificial intelligence (Al) and extended reality (XR), and online objective requirements, the fusion of a digital world and a physical world is also accelerated. The experience of people for interaction modes is also undergoing fundamental changes, and the requirements for stronger interactivity and higher immersion drive a bearer network, that is, a real time network (RTN) of an RTC application to change and continuously evolve towards lower delay and better quality.

The route planning between network element nodes is the core technology of the RTN, and reasonable route planning may provide faster and better data transmission experience for the RTC application, thereby providing important competitiveness for an RTN system. However, there are many pain points in the current route planning technology of the RTN in the industry:
The first pain point is poor real time performance. The route planning in the related art is to merely route to a node cluster. When service data is forwarded according to a route table, a data forwarding instance needs to be planned and selected from the cluster, which results in a high delay in a data forwarding stage, a long data link establishment time and worse real time performance, thereby reducing the user experience.

The second pain point is low accuracy. The route planning in the related art is generally a static planning, which cannot implement dynamical, global and reasonable planning according to a real time network topology change, a network detection indicator change, a network element node load change, and the like; and meanwhile, there is also the problem of a routing rule and a computing mode being single, and thus different service requirements cannot be met. Therefore, a planned route link is inaccurate, is only suitable for private network transmission, and is unsuitable for the Internet.

### Summary

Embodiments of the present disclosure provide a route planning method and apparatus for a real time network, so as to at least solve the problem in the related art of a planned route link being inaccurate due to the fact that a route cannot be planned according to a real time network topology.

According to one embodiment of the present disclosure, provided is a route planning method for a real time network, including: data of each edge node in a real time network (RTN) is collected according to acquired real time network topology information of the RTN; the data is mapped into quantification scores of links between the edge nodes according to route policies of different requirement types, so as to obtain a multi-policy full RTN link quantification network topology; and first route planning is performed on a plurality of edge nodes in the multi-policy full RTN link quantification network topology, and second route planning is performed on a data instance in a first edge node based on the first edge node in a first route.

According to another embodiment of the present disclosure, provided is a route planning apparatus for a real time network, including: a collection module, configured to collect data of each edge node in a real time network (RTN) according to acquired real time network topology information of the RTN; a mapping module, configured to map the data into quantification scores of links between the edge nodes according to route policies of different requirement types, so as to obtain a multi-policy full RTN link quantification network topology; and a planning module, configured to perform first route planning on a plurality of edge nodes in the multi-policy full RTN link quantification network topology, and perform second route planning on a data instance in a first edge node based on the first edge node in a first route.

According to yet another embodiment of the present disclosure, further provided is a computer-readable storage medium, wherein a computer program is stored in the computer-readable storage medium, and the computer program is configured to to cause, when executed by a processor, the processor to perform the steps in any of the above method embodiments when running.

According to yet another embodiment of the present disclosure, further provided is an electronic apparatus, including a memory and a processor, wherein a computer program is stored in the memory, and the processor is configured to execute the computer program to perform the steps in any of the above method embodiments.

### Brief Description of the Drawings

Fig. 1 is a block diagram of a hardware structure of a computer terminal for running a route planning method for a real time network according to an embodiment of the present disclosure;
Fig. 2 is a schematic diagram of a network architecture of an RTN according to an embodiment of the present disclosure;
Fig. 3 is a flowchart of a route planning method for a real time network according to an embodiment of the present disclosure;
Fig. 4 is a structural block diagram of a route planning apparatus for a real time network according to an embodiment of the present disclosure;
Fig. 5 is a structural block diagram of a route planning apparatus for a real time network according to another embodiment of the present disclosure;
Fig. 6 is a structural block diagram of a route planning apparatus for a real time network according to yet another embodiment of the present disclosure;
Fig. 7 is a structural block diagram of a route planning apparatus for a real time network according to yet another embodiment of the present disclosure;
Fig. 8 is a flowchart of a route planning method according to an embodiment of the present disclosure;
Fig. 9 is a schematic diagram of an initial network topology according to an embodiment of the present disclosure;
Fig. 10 is a schematic diagram of a method for acquiring real time edge data according to an embodiment of the present disclosure;
Fig. 11 is a schematic diagram of a multi-policy quantification network topology according to an embodiment of the present disclosure;
Fig. 12 is a schematic diagram of first-level routing according to an embodiment of the present disclosure; and
Fig. 13 is a schematic diagram of an optimal route table of second-level routing according to an embodiment of the present disclosure.

### Detailed Description of the Embodiments

Hereinafter, the embodiments of the present disclosure will be described in detail with reference to the drawings and in combination with the embodiments.

It should be noted that the terms "first", "second" and the like in the specification, claims and drawings of the embodiments of the present disclosure are used to distinguish similar objects, and are not necessarily used to describe a specific order or sequence.

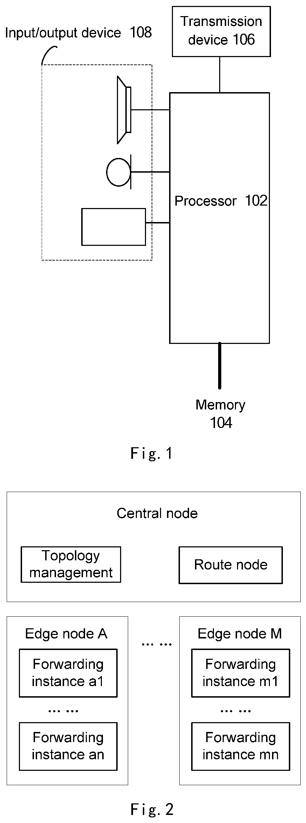

The method embodiments provided in the embodiments of the present application may be executed in a mobile terminal, a computer terminal, or a similar computing apparatus. Taking running on a computer terminal as an example, Fig. 1 is a block diagram of a hardware structure of a computer terminal for running a route planning method for a real time network according to an embodiment of the present disclosure. As shown in Fig. 1, the computer terminal may include one or more (only one is shown in Fig. 1) processors (102) (the processor 102 may include, but is not limited to, a processing apparatus such as a microprocessor or a field programmable gate array (FPGA)) and a memory 104 for storing data, wherein the computer terminal may further include a transmission device 106 for a communication function, and an input/output device 108. Those ordinary skilled in the art may understand that the structure shown in Fig. 1 is merely schematic and does not cause a limitation to the structure of the computer terminal, for example, the computer terminal may further include more or fewer components than those shown in Fig. 1, or have a configuration different from that shown in Fig. 1.

The memory 104 may be configured to store a computer program, for example, software programs and modules of application software, for example, a computer program corresponding to the route planning method for the real time network in the embodiments of the present disclosure, and the processor 102 executes various functional applications and data processing, that is, implements the above method, by running the computer program stored in the memory 104. The memory 104 may include a high-speed random access memory, and may further include a non-volatile memory, such as one or more magnetic storage apparatuses, flash memories, or other non-volatile solid-state memories. In some instances, the memory 104 may further include memories remotely disposed relative to the processor 102, and these remote memories may be connected to the computer terminal via a network. Instances of the above network include, but are not limited to, the Internet, an intranet, a local area network, a mobile communication network, and combinations thereof.

The transmission device 106 is configured to receive or send the data via a network. Specific instances of the above network may include a wireless network provided by a communication provider of the computer terminal. In one instance, the transmission device 106 includes a network interface controller (NIC), which may be connected with other network devices via a base station to communicate with the Internet. In one instance, the transmission device 106 may be a radio frequency (RF) module, which is configured to communicate with the Internet in a wireless manner.

The embodiments of the present application may run on the network architecture of the RTN shown in Fig. 2, as shown in Fig. 2, the network architecture includes a central node and a plurality of edge nodes, wherein the central node further includes a topology management and route center, and each edge node further includes a plurality of forwarding instances (i.e., data instances).

Specifically, the central node is a brain of the RTN, and is responsible for computing, controlling and scheduling the edge nodes in the RTN.

The topology management configures network topology information of the RTN, and the route center performs intelligent route planning on the edge nodes.

The edge node is a neuron of the RTN, and is responsible for forwarding service data, wherein the forwarding instance is an application program that really forwards data in the edge node. One edge node represents one forwarding instance cluster, which may include a plurality of forwarding instances.

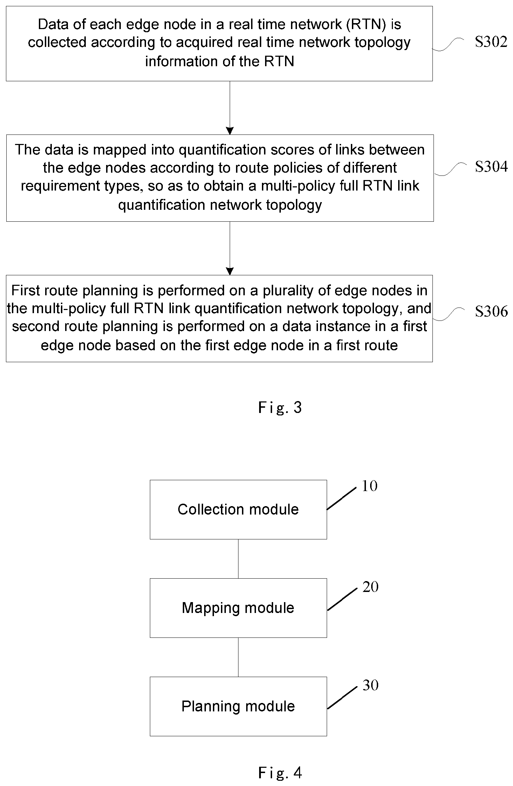

In the present embodiment, a route planning method for a real time network running on the computer terminal or the network architecture is provided, Fig. 3 is a flowchart of a route planning method for a real time network according to an embodiment of the present disclosure, and as shown in Fig. 3, the flow includes the following steps:
Step S302, data of each edge node in a real time network (RTN) is collected according to acquired real time network topology information of the RTN;
step S304, the data is mapped into quantification scores of links between the edge nodes according to route policies of different requirement types, so as to obtain a multi-policy full RTN link quantification network topology; and
step S306, first route planning is performed on a plurality of edge nodes in the multi-policy full RTN link quantification network topology, and second route planning is performed on a data instance in a first edge node based on the first edge node in a first route.

In the present embodiment, prior to the step S302, the method further includes: an initial network topology of the RTN is acquired; the initial network topology of the RTN in real time is updated according to a notification of a message subscription mechanism, so as to acquire a real time network topology; or, the network topology of the RTN is periodically queried to acquire the real time network topology.

In the present embodiment, the step S302 includes: a data detection request is sent to each edge node according to the real time network topology information; and a data collection request is periodically sent to each edge node, so as to collect detection data information and instance data information.

In the present embodiment, the detection data information at least includes one of the following detection indicators: a packet loss rate, a delay, a jitter and a link bandwidth of the RTN.

In the present embodiment, the step S304 includes: the data of a plurality of detection indicators is input into quantification models according to the requirement types of the route policies, so that the data is mapped into the quantification scores of the links between the edge nodes, wherein the route policy of each type corresponds to one quantification model.

In an exemplary embodiment, the requirement types of the route policies at least include one of the following: a quality-priority policy, a cost-priority policy, and a quality-priority and cost-priority comprehensive policy.

In the present embodiment, the step S304 includes: in a case where a change rate of the quantification score does not exceed a preset threshold, the quantification score of a corresponding link in the multi-policy full RTN link quantification network topology is kept unchanged; and in a case where the change rate of the quantification score exceeds the preset threshold, the quantification score of the corresponding link in the multi-policy full RTN link quantification network topology is updated.

In the present embodiment, the step S306 includes: a link with the minimum quantification score between any two or more edge nodes is selected to plan a first route link.

In the present embodiment, the step S306 includes: instance data information in the first edge node is acquired; and according to the instance data information, a data instance with the least load in the first edge node is selected for planning a second route.

By means of the above steps, the multi-policy full RTN link quantification network topology is generated by the acquired topology information of the real time network (RTN) and the information of the edge nodes, so as to perform dynamic route planning according to the multi-policy full RTN link quantification network topology. Therefore, it is possible to solve the problem in the related art of a planned route link being inaccurate due to the fact that a route cannot be planned according to the real time network topology, and thus the accurate of route planning is improved.

By means of the descriptions of the above embodiments, those skilled in the art may clearly understand that the method according to the above embodiments may be implemented by software plus a necessary universal hardware platform, and of course may also be implemented by hardware, but the former is a better embodiment in many cases. Based on this understanding, the technical solutions of the present disclosure essentially or the part contributing to the prior art may be embodied in the form of a software product, the computer software product is stored in a storage medium (such as a read-only memory/random access memory(ROM/RAM), a magnetic disk and an optical disk), and include several instructions for enabling a terminal device (which may be a mobile phone, a computer, a server, or a network device and the like) to execute the method in various embodiments of the present disclosure.

In the present embodiment, a route planning apparatus for a real time network is further provided, the apparatus is configured to implement the above embodiments and preferred implementations, and details are not described again. As used below, the term "module" may implement a combination of software and/or hardware of a predetermined function. Although the apparatus described in the following embodiments is preferably implemented by software, the implementation of hardware or a combination of software and hardware is also possible and conceivable.

Fig. 4 is a structural block diagram of a route planning apparatus for a real time network according to an embodiment of the present disclosure, and as shown in Fig. 4, the apparatus includes a collection module 10, a mapping module 20 and a planning module 30.

The collection module 10 is configured to collect data of each edge node in a real time network (RTN) according to acquired real time network topology information of the RTN;
the mapping module 20 is configured to map the data into quantification scores of links between the edge nodes according to route policies of different requirement types, so as to obtain a multi-policy full RTN link quantification network topology; and
the planning module 30 is configured to perform first route planning on a plurality of edge nodes in the multi-policy full RTN link quantification network topology, and perform second route planning on a data instance in a first edge node based on the first edge node in a first route.

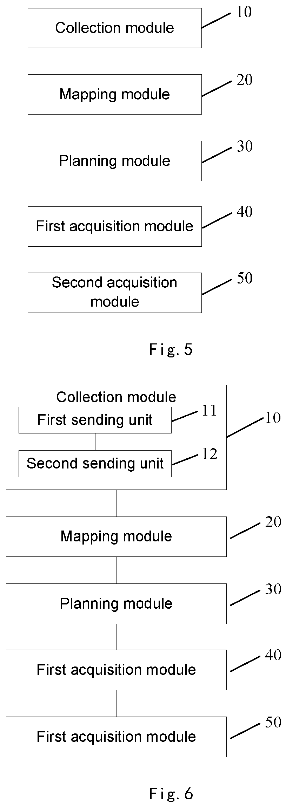

Fig. 5 is a structural block diagram of a route planning apparatus for a real time network according to an embodiment of the present disclosure, and as shown in Fig. 5, in addition to including all the modules shown in Fig. 4, the apparatus further includes:
a first acquisition module 40, configured to acquire an initial network topology of the RTN; and
a second acquisition module 50, configured to update the initial network topology of the RTN in real time according to a notification of a message subscription mechanism, so as to acquire a real time network topology; or, periodically query the network topology of the RTN to acquire the real time network topology.

Fig. 6 is a structural block diagram of a route planning apparatus for a real time network according to an embodiment of the present disclosure, as shown in Fig. 6, the apparatus includes all the modules shown in Fig. 5, and the collection module 10 further includes:
a first sending unit 11, configured to send a data detection request to each edge node according to the real time network topology information; and
a second sending unit 12, configured to periodically send a data collection request to each edge node, so as to collect detection data information and instance data information.

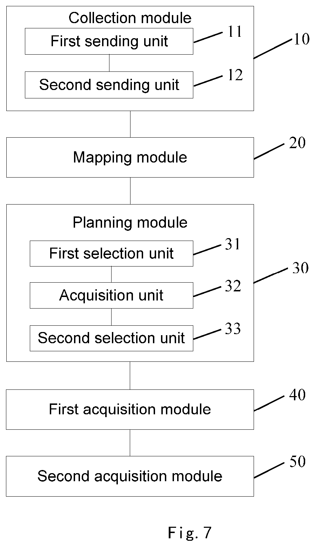

Fig. 7 is a structural block diagram of a route planning apparatus for a real time network according to an embodiment of the present disclosure, as shown in Fig. 7, the apparatus includes all the modules shown in Fig. 5, and the planning module 30 further includes:
a first selection unit 31, configured to select a link with the minimum quantification score among the plurality of edge nodes to plan a first route link;
an acquisition unit 32, configured to acquire instance data information in the first edge node; and
a second selection unit 33, configured to: select, according to the instance data information, a data instance with the least load in the first edge node for planning a second route.

It should be noted that the above modules may be implemented by software or hardware, and for the latter, the above modules may be implemented in the following manners, but are not limited to: the above modules are all located in the same processor; or the above modules are located in different processors in any combination form.

To facilitate the understanding of the technical solutions provided in the present disclosure, a detailed description will be given below in combination with embodiments of specific scenarios.

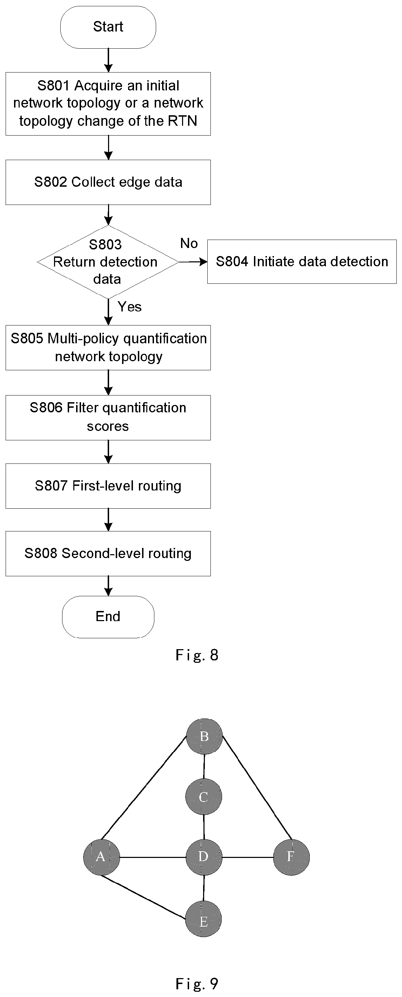

An embodiment of the present disclosure provides a route planning method capable of running in the network architecture of Fig. 2, Fig. 8 is a flowchart of a route planning method according to an embodiment of the present disclosure, as shown in Fig. 8, the method includes the following steps:
Step S801, an initial network topology or a network topology change of the RTN is acquired.

Specifically, the route center needs to dynamically acquire topology information of the RTN, that is, network topology information is acquired in real time.

Step S802, a data detection request is issued to an edge node to collect edge data.

Specifically, the route center issues the data detection request to the edge node according to a real time network topology, and then each edge node performs network detection on the edge node connected thereto; and meanwhile, the route center periodically initiates a data collection request to the edge node, so as to collect information such as detection data and instance data.

Step S803, it is judged whether detection data is returned;
specifically, if it is determined that the detection data is not returned, skipping to step S804; and
if it is determined that the detection data has been returned, skipping to step S805.

Step S804, the data detection request is initiated again.

Specifically, in a case where it is determined that the detection data is not returned, the data detection request is issued to the edge node again.

Step S805, edge data is mapped into a multi-policy quantification network topology.

Specifically, the route center maps the edge data into a whole-network quantification network topology according to different route policies.

Step S806, quantification scores in the multi-policy quantification network topology are filtered and screened.

Step S807, first-level routing is performed.

Specifically, the route center plans first-level routing between nodes according to a real time multi-policy quantification network topology.

Step S808, second-level routing is performed.

Specifically, the route center plans second-level routing between instances according to real time edge node instance data.

A detailed description of related steps in the above route planning method will be given below in combination with specific implementation scenarios.

### 1. Regarding the acquisition of the real time network topology

The network topology represents the distribution of the edge nodes in the RTN and the connection conditions of connected edges between the edge nodes. In the embodiments of the present disclosure, the network topology needs to be configured in the topology management of the central node, is completely configured according to real node distribution and connection conditions, and also includes information such as distances between the edge nodes and an allocable total bandwidth.

Specifically, in an initialization phase, the route center needs to acquire the initial network topology of the RTN from the topology management.

For example, as shown in Fig. 9, the initial network topology is a net structure composed of six edge nodes, the edge nodes are A, B, C, D, E, F, and the connected edges are A-B, A-D, A-E, B-C, B-F, C-D, D-E, and D-F.

In a network topology change stage of the RTN, if cases such as addition and deletion of the nodes, and addition and deletion of the connected edges occur, the topology management notifies the route center in real time via a kafka message subscription mechanism to perform topology change, and in addition, the route center also periodically queries the network topology from the topology management and updates the network topology. In the present embodiment, the real time performance may be ensured by a kafka mechanism, and the reliability may be ensured by a timing mechanism.

### 2. Regarding the acquisition of the real time edge data

The route center of the central node periodically collects information such as detection data and instance data from the edge node according to the real time network topology of the RTN.

### Specifically, regarding the issuance of the data detection request:

The route center analyzes the connection conditions between the edge nodes according to the current real time network topology of the RTN, and issues the data detection request to each node; and each node parses request data, and performs network detection on the node connected thereto, including detection indicator data such as a packet loss rate, a delay, a jitter and a bandwidth of the network.

After a change occurs in the network topology of the RTN, the route center issues a new data detection request according to real time node connection conditions.

### Regarding periodic data collection:

The route center periodically initiates the data collection request to the edge node. In addition to the above detection data, data to be collected further includes forwarding instance information of each node, for example, a load or a CPU of an instance, etc. The collection time granularity is seconds, that is, one collection is performed per second. If it is discovered that there is no detection data in the collected data, the data detection request needs to be reissued.

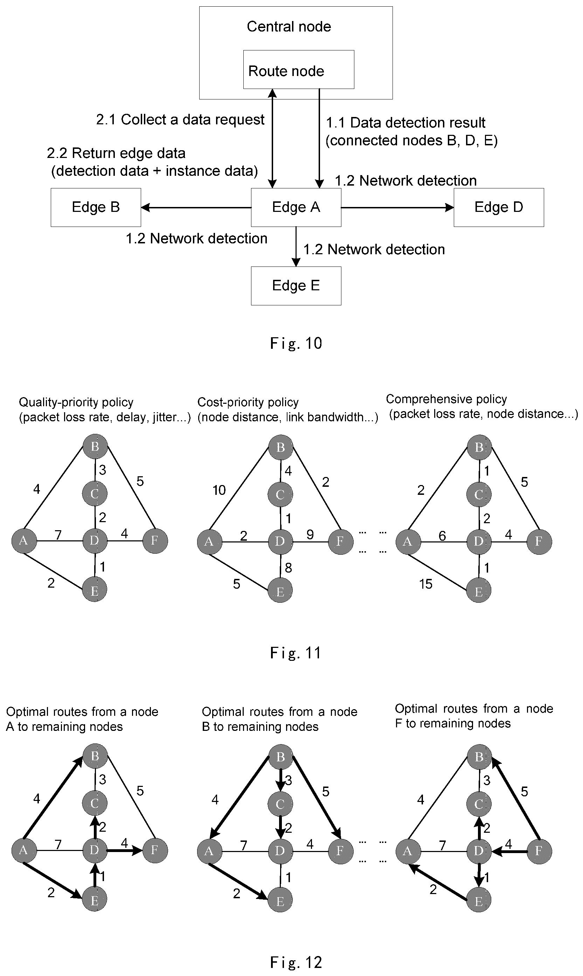

For example, as shown in Fig. 10, the method for acquiring the real time edge data includes the following steps:

### Detection stage:

Step 1.1, the route center of the central node initiates the data detection request to the edge node A according to the initial network topology of the RTN; and
Step 1.2,after receiving the request, the edge node A performs network detection on the edge node B, the edge node D and the edge node E.

### Collection stage:

Step 2.1, the route center periodically initiates the data collection request to the edge node A; and
Step 2.2, the edge node A returns the detection data information of the edge node B, the edge node D and the edge node E, and instance data information of the present node. By analogy, the detection and collection processes of the remaining edge nodes are similar to those of the edge node A.

### 3. Regarding the multi-policy quantification network topology

The route center selects edge data according to different route policies, maps the edge data into a whole-network quantification network topology, and filters and screens the quantification scores.

### Specifically, regarding the mapping of the quantification network topology:

In order to cope with different requirements of different services, the route center formulates a plurality of route policies. Each route policy has a corresponding link quantification mathematical model, the plurality of acquired edge indicators are input into the quantification models to be mapped into the quantification scores of the links between connected edges of the nodes, so as to obtain the whole-network quantification network topology. The route center traverses all route policies and quantification models according to the real time edge data, to generate a multi-policy whole-network link quantification network topology.

For example, when the route policy is a quality-priority policy, it is required that a link with the minimum transmission delay is selected for the purpose of pursuing quality, and the quantification model selects the packet loss rate (%), the delay (ms), the jitter (ms) and the like as indicators, and maps these indicators into link scores; when the route policy is a cost-priority policy, it is required that a link with the minimum transmission cost is selected for the purpose of saving cost, and a node distance, a link bandwidth and the like are selected as indicators; and when the route policy is a comprehensive policy, it is required that model indicators of the quality policy and the cost policy are comprehensively considered for the purpose of balancing the quality and cost. The route center generates the multi-policy quantification network topology in real time, as shown in Fig. 11.

By formulating a plurality of policies to cope with different requirements of different services, the real time edge data is mapped to the real time multi-policy quantification network topology, thereby ensuring the accuracy of the quantification scores of the connected edges of the nodes.

### Regarding the filtering of the quantification scores:

In order to reduce useless work made due to the fact that a change in the link score is too small to cause a new planned route link to be unchanged, and meanwhile in order to reduce the computing pressure during route planning, the frequency of updating the link score needs to be reduced. The route center screens and filters the link quantification score of each edge, and when the change rate of the score does not exceed a set threshold, the link score is not updated to a route planning computing model.

For example, the previous link score from the node A to the node B is 100, new edge data arrives at present, the link score from the node A to the node B computed by the route center according to the latest quantification network topology is 101, at this time, a set score change rate threshold is 10%, the change rate of the current score value and the previous score value is 1%, which does not exceed the set score change rate threshold and thus is not updated to the computing model. By filtering and screening the quantification scores, the useless work made due to the fact that the change in the link score is too small to cause the new planned route link to be unchanged is reduced, and the computing pressure during route planning is also reduced.

In the present embodiment, information such as the network topology of the RTN and edge data are acquired in real time to generate the multi-policy quantification network topology for dynamic multi-level route planning, so that the problems of high delay in the data forwarding stage and non-real time route planning can be solved, and thus the timeliness of route planning is improved; and meanwhile, the problems such as the routing rule and the computing mode being single are also solved, and thus the accuracy of route planning is improved.

### 4. Regarding multi-level route planning

The computing model of the route center plans a route between the nodes according to the real time quantification network topology, that is, performs first-level routing; and plans a routebetween instances according to real time edge node instance data, that is, performs second-level routing.

### Regarding the first-level routing

The route center plans optimal routes between the edge nodes according to the filtered and screened multi-policy quantification network topology, that is, performs the first-level routing. Firstly, the route center selects a certain node as a starting node, computes optimal routes from the node to other nodes, and appoints that if the node may be directly connected to the other nodes, use the link score as the distance thereof, and if the node cannot be directly connected to the other nodes, use infinity as the distance thereof. Next, the route center selects a node with the minimum distance as the next point. Then, the route center recomputes the distances from the starting node to other nodes after passing through the selected node, and updates the minimum distance data. Finally, the route center performs analogy until traversing all nodes, and the selected node is the determined optimal route node, which will not participate in subsequent computing.

The route center computes the optimal route from any node to any other node in real time according to the multi-policy quantification network topology updated in real time.

For example: taking the quality-priority policy as an example, the optimal route from the node A to any node is planned, the optimal route from the node A to the node B is "A→B", the optimal route from the node A to the node C is "A→E→D→C", the optimal route from node A to the node D is "A→E→D", the optimal route from the node A to the node E is "A→E→D→F", as shown in Fig. 12. By analogy, the optimal routes from the remaining nodes to any node are shown in Fig. 12.

### Regarding the second-level routing:

The route center plans optimal routes between instances under the nodes according to the result of first-level routing, that is, performs second-level routing. Firstly, upon receiving a route query request, the route center selects an optimal route link according to information such as a route policy, a source node and a target node. Then, the route center determines a route node according to the optimal route link, and determines instance data information under the node according to the collected edge data information. Finally, the route center selects an instance with the least load under the route node in real time, and traverses the nodes to finally generate an optimal route table.

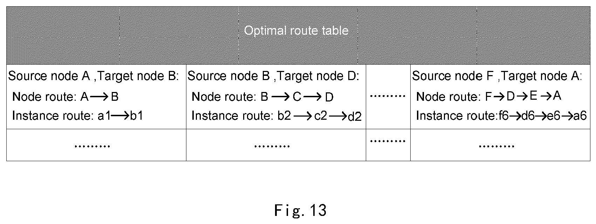

For example, taking the quality-priority policy as an example, first-level routing from the source node A to the target node B, that is, "A→B", is planned according to the planning method for the first-level routing, wherein the instance with the least load under the node A is a1, and the instance with the least load under the node B is b1, therefore the planned second-level routing is "a1-b1", and the final route expression is shown in Fig. 13. By analogy, an optimal route table from the remaining nodes and any node is shown in Fig. 13.

The above embodiments of the present disclosure are applicable to related industries of RTC, such as video conferences, cloud computers, interactive live streaming, an extended reality (XR), etc.

Through dynamic multi-level route planning, the instance routing process of the edge nodes is moved to the central node for unified computing and planning, so that a high delay in the data forwarding stage can be avoided, and the real time performance of service transmission is improved. Moreover, the data of multi-level routing comes from information such as real time network topology and edge data, thereby further ensuring the real time performance of the data, and a new route is dynamically planned according to real time data changes, thereby improving the accuracy of route planning.

An embodiment of the present disclosure further provides a computer-readable storage medium, wherein a computer program is stored in the computer-readable storage medium, and the computer program is configured to execute the steps in any of the above method embodiments when running.

In an exemplary embodiment, the computer-readable storage medium may include, but is not limited to, various media capable of storing computer programs, such as a USB flash disk, a read-only memory (ROM), a random access memory (RAM), a mobile hard disk, a magnetic disk, or an optical disk.

An embodiment of the present disclosure further provides an electronic apparatus, including a memory and a processor, wherein a computer program is stored in the memory, and the processor is configured to run the computer program to execute the steps in any of the above method embodiments.

In an exemplary embodiment, the electronic apparatus may further include a transmission device and an input/output device, wherein the transmission device is connected with the processor, and the input/output device is connected with the processor.

For specific examples in the present embodiment, reference may be made to the examples described in the above embodiments and exemplary implementations, and thus details are not repeated in the present embodiment.

Obviously, those skilled in the art should understand that various modules or steps of the embodiments of the present disclosure may be implemented by using a general-purpose computing apparatus, may be concentrated on a single computing apparatus or distributed on a network composed of a plurality of computing apparatuses, and may be implemented by program codes executable by the computing apparatus, so that the modules or steps may be stored in a storage apparatus to be executed by the computing apparatus, and in some cases, the steps shown or described may be executed in an order different from that described herein, or may be fabricated into individual integrated circuit modules, or a plurality of modules or steps therein may be fabricated into a single integrated circuit module for implementation. In this way, the present disclosure is not limited to any specific combination of hardware and software.

The above descriptions are only preferred embodiments of the present disclosure and are not intended to limit the present disclosure, and for those skilled in the art, the present disclosure may have various modifications and changes. Any modifications, equivalent replacements, improvements, and the like, made within the principles of the present disclosure, shall fall within the protection scope of the present disclosure.

## Claims

1. A route planning method for a real time network, comprising:
collecting data of each edge node in a real time network, RTN, according to acquired real time network topology information of the RTN;
mapping the data into quantification scores of links between the edge nodes according to route policies of different requirement types, so as to obtain a multi-policy full RTN link quantification network topology; and
performing first route planning on a plurality of edge nodes in the multi-policy full RTN link quantification network topology, and performing second route planning on a data instance in a first edge node based on the first edge node in a first route.

2. The method according to claim 1, wherein before collecting the data of each edge node in the RTN according to the acquired real time network topology information of the RTN, the method further comprises:
acquiring an initial network topology of the RTN;
updating the initial network topology of the RTN in real time according to a notification of a message subscription mechanism, so as to acquire the real time network topology information; or, periodically querying the network topology of the RTN to acquire the real time network topology information.

3. The method according to claim 1, wherein collecting the data of each edge node in the RTN according to the acquired real time network topology information of the RTN comprises:
sending a data detection request to each edge node according to the real time network topology information; and
periodically sending a data collection request to each edge node, so as to collect detection data information and instance data information.

4. The method according to claim 3, wherein the detection data information at least comprises one of the following detection indicators:
a packet loss rate, a delay, a jitter and a link bandwidth of the RTN.

5. The method according to claim 1, wherein mapping the data into the quantification scores of the links between the edge nodes according to the route policies of different requirement types comprises:
inputting the data of a plurality of detection indicators into quantification models according to the requirement types of the route policies, so that the data is mapped into the quantification scores of the links between the edge nodes, wherein the route policy of each type corresponds to one quantification model.

6. The method according to claim 5, wherein the requirement types of the route policies at least comprise one of the following:
a quality-priority policy, a cost-priority policy, and a quality-priority and cost-priority comprehensive policy.

7. The method according to claim 1, wherein obtaining the multi-policy full RTN link quantification network topology comprises:
in a case where a change rate of the quantification score does not exceed a preset threshold, keeping the quantification score of a corresponding link in the multi-policy full RTN link quantification network topology unchanged; and
in a case where the change rate of the quantification score exceeds the preset threshold, updating the quantification score of the corresponding link in the multi-policy full RTN link quantification network topology.

8. The method according to claim 1, wherein performing first route planning on the plurality of edge nodes in the multi-policy full RTN link quantification network topology comprises:
selecting a link with the minimum quantification score between any two or more edge nodes to plan a first route link.

9. The method according to claim 1, wherein performing second route planning on the data instance in the first edge node comprises:
acquiring instance data information in the first edge node; and
selecting a data instance with the least load in the first edge node for planning a second route according to the instance data information.

10. A route planning apparatus for a real time network, comprising:
a collection module, configured to collect data of each edge node in a real time network, RTN, according to acquired real time network topology information of the RTN;
a mapping module, configured to map the data into quantification scores of links between the edge nodes according to route policies of different requirement types, so as to obtain a multi-policy full RTN link quantification network topology; and
a planning module, configured to perform first route planning on a plurality of edge nodes in the multi-policy full RTN link quantification network topology, and perform second route planning on a data instance in a first edge node based on the first edge node in a first route.

11. A computer-readable storage medium, wherein a computer program is stored in the computer-readable storage medium, and the computer program is configured to cause, when executed by a processor, the processor to perform steps of the method as claimed in any of claims 1-9.

12. An electronic apparatus, comprising a memory, a processor, and a computer program stored on the memory and capable of running on the processor, wherein the processor is configured to execute the computer program to perform steps of the method as claimed in any of claims 1-9.
